# EUROPEAN PATENT SPECIFICATION

(11) **EP 1 362 677 B1**
(45) Date of publication and mention of the grant of the patent: **19.10.2005**
(21) Application number: 03425268.4
(22) Date of filing: 30.04.2003
(51) Int. Cl.: B27B 27/08, B23D 59/00

(54) **Apparatus to display the measurement of sloping cuts on panels**
Vorrichtung zur Darstellung der Messung von Schrägschnitten auf Platten
Appareil pour afficher de la mesure de coupes obliques sur des panneaux

(30) Priority: 14.05.2002 IT BO20020292
(43) Date of publication of application: 19.11.2003
(73) Proprietor: SCM GROUP S.p.A., 47900 Rimini (IT)
(72) Inventor: Spazzoli, Andrea, 47814 Bellaria (Rimini) (IT)
(74) Representative: Lanzoni, Luciano

(56) References cited:
- EP-A- 1 205 285
- DE-A- 3 423 809
- DE-A- 19 518 614
- DE-U- 9 307 635
- US-A- 3 910 142
- US-A- 5 490 665

## Description

The present invention relates to an apparatus to display the measurement of sloping cuts on panels. Such a device is known from DE9307635U1, which is considered to represent the closest state of the art. The present invention can be associated with machines for working panels made of wood or similar materials and, in particular, with circular saw machines.

As is known, machines for cutting wooden panels (standard machines commonly called circular saws) substantially consist of a supporting base, the upper portion of which defines a horizontal work table extending prevalently in a direction along which the panel to be cut slides.

The work table presents a slot aligned with the direction of sliding and from which a portion of a horizontal-axis (nominally) circular saw emerges.

A support carriage for the panel can be constrained, by sliding, on one side of the work table, parallel to the direction of sliding, extending and projecting transversally from this side.

The carriage consists of a support frame and a graduated rule positioned above the frame, and acting as a stop for the edge of the panel to be cut. The rule is equipped with a special stop bar, projecting transversally from the rule and acting as the visual reference for the length of the panel.

The graduated rule extends from a position near the blade of circular saw to the edge of the frame, while the stop bar can slide along the graduated rule.

During functioning, the panel is positioned on the frame, resting against the rule with the portion to be cut on the machine work table, so it can be intercepted by the blade. The measurement, with automatic or electronic reading, which must be made on the panel is shown thanks to the stop bar which acts as a reference for an operator for the portion of panel to be moved towards the cutting blade.

The operator positions the panel against the rule, using the stop bar as a reference for the measurement, and then pushes the panel and the frame, either manually or with appropriate motor-driving means, towards the blade for the cutting operation.

The rule is graduated, with the zero point positioned at the side (external) of the blade facing the frame. The operator is therefore able to place the panel to be cut in the exact position to obtain a certain measurement which is shown immediately, thanks to the stop bar which slides along the rule.

Circular saw machines are usually equipped with appropriate means for tilting the rule, and thus the panel to be cut, with respect to the position at right angles to the infeed direction, to make slanting cuts, for example to produce right-angled trapezium shaped panels. The tilting of the rule makes it possible in fact to cut the panel according to cutting lines which are no longer perpendicular to the side against the rule.

Similarly, the saw can also be tilted, in other words rotated around its pivot perpendicular to the work table, so that cuts according to a number of variable angles can be made.

It is also known from document DE 93 07 635 U an apparatus to display the measurement of slanting cuts on panels which can be associated with circular saw machines.

The apparatus presents a storage and calculation unit mounted on the machine and data input means connected to the storage and calculation unit, to enter in the storage and calculation unit at least: a parameter relative to a first length of a portion of the cut panel parallel to a rule; a parameter relative to the angular position of the rule. The apparatus also comprises a display unit connected to the storage and calculation unit to display a parameter corresponding to the working reference measurement.

The Applicant has found that similar machines are not without drawbacks and can be improved from various points of view, mainly in relation to the practicality of making slanting cuts.

More specifically, the Applicant has noted that in this case, the immediate measurement that the operator can show on the rule, by means of the stop bar, is only the measurement relative to the side of the panel resting against the graduated rule, a measurement which, above all, does not correspond to the true cutting value: this is due to the fact that the initial zero value of the rule is calibrated according to its perpendicular position with respect to the cutting surface and therefore shifts - leading to measurement errors - depending on the angle of inclination. The cutting measurement, or the position of the stop bar on the rule, must therefore be calculated by the operator on the basis of the shift angle and the width of the panel.

The calculation of the measurement must take additional variables into account in the event of further inclination of the blade.

The aim of the present invention is to resolve the problems encountered in prior art by proposing an apparatus to show the measurement of slanting cuts on panels, in other words the position of the stop bar on the rule, making these operations easier to carry out.

This aim and others, which will be made clearer in the description which follows, are achieved by means of an apparatus to show the measurement of slanting cuts on panels, comprising the features set out in one or more of the claims herein.

Further features and advantages are more clearly illustrated in the detailed description of a preferred, but not binding, embodiment of an apparatus to show the measurement of slanting cuts on panels, according to this invention. This description is set out below with reference to the attached figures, provided merely as examples and, therefore, not limiting, in which:
- Figure 1 is a perspective view of a circular saw machine equipped with the apparatus made in accordance with the present invention;
- Figure 2 is a view from above of another embodiment of the machine illustrated in Figure 1;
- Figures 3a and 3b show two schematics views from above of the machine illustrated in Figure 1 on which a panel to be cut is placed in two different working positions;
- Figure 4 shows an enlarged view of a part of the apparatus in accordance with the present invention of the machine illustrated in Figures 1 and 2;
- Figure 5 shows a schematic front view of a part of the circular saw tool of the machine illustrated in the previous figures;
- Figure 6 shows a flow diagram of the apparatus for the display of the slanting cut measurement.

With reference to the Figures, the numeral 1 denotes as a whole a circular saw machine equipped with an apparatus 2 in accordance with the present invention.

The machine 1 essentially comprises a base 3 supporting a horizontal work table 4 which extends prevalently in one direction and corresponding to the infeed direction X of a panel P to be cut, in this case a rectangular panel.

The work table 4 has a slot 5 from which, at least during the use of the machine 1, a blade 6a of a circular saw 6 emerges.

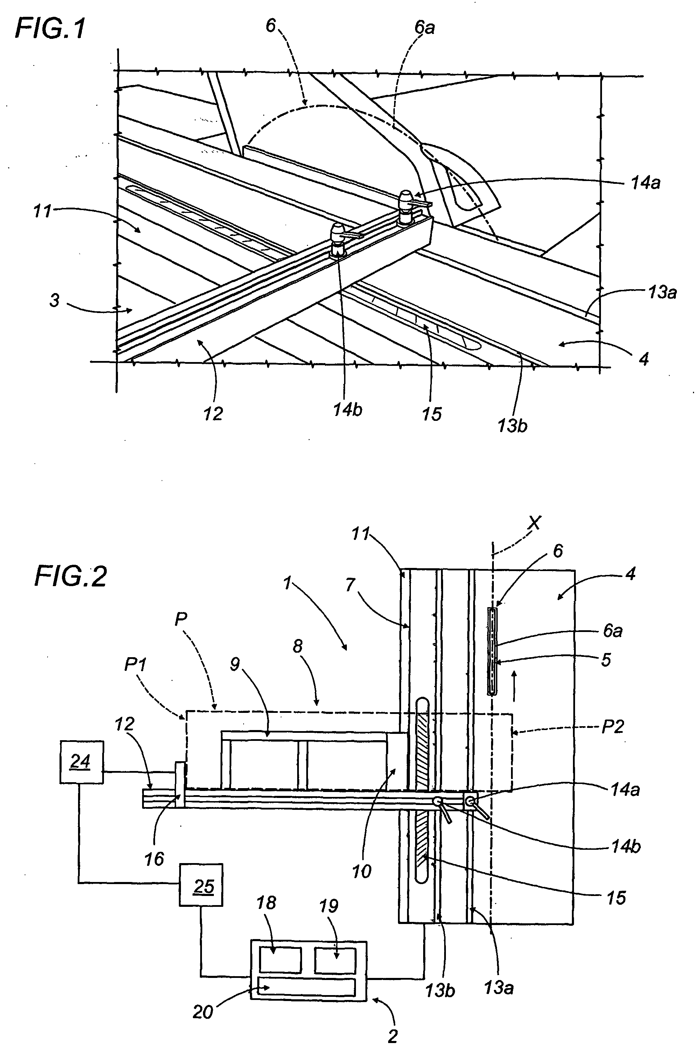

The rotation axis of the circular saw, not shown, is substantially parallel to the work table 4 in Figures 1 to 3 while the blade 6a and the slot 5 are parallel to the infeed direction X.

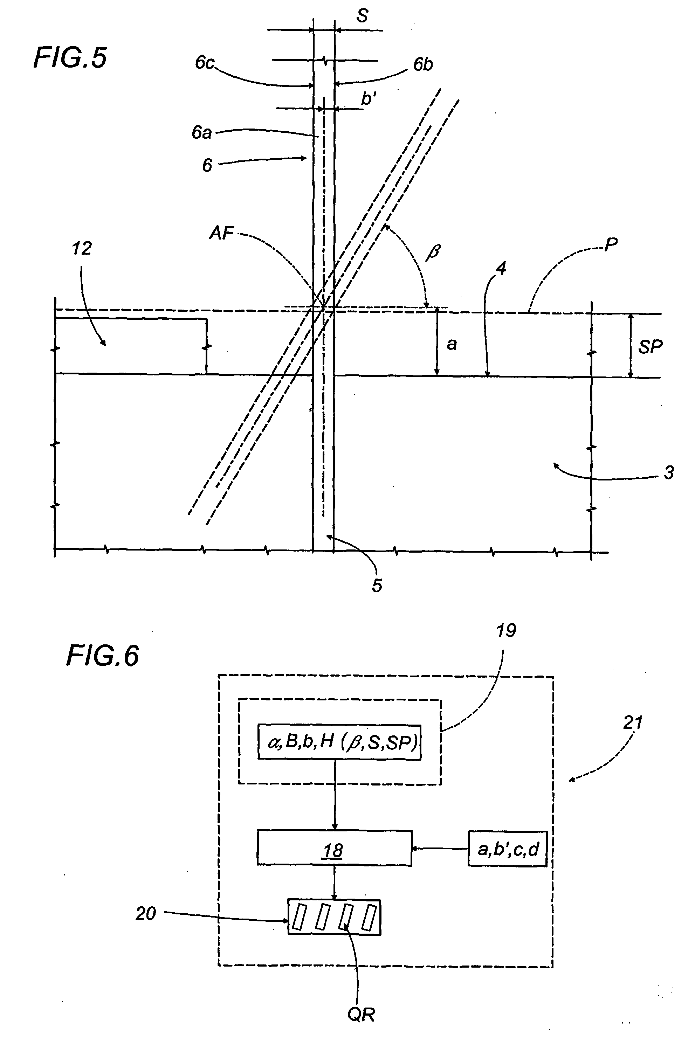

Figure 5 shows how the blade 6a can be inclined with respect to the work table 4 for particular operations; the blade 6a, in fact, can be rotated at an angle around a pivot axis AF parallel to the horizontal work table 4 to adopt a plurality of slanting positions with respect to the horizontal work table.

The circular saw 6 is turned by appropriate motor means, which are known and therefore not illustrated or described, able to vary the number of revolutions per minute at which the blade 6a turns.

The blade 6a is preferably mobile between a rest position, in which it lies hidden in the base 3 of the machine 1, and at least one working position, in which it protrudes from the work table 4 to intercept the panel P.

As clearly shown in Figure 2, a frame 8 is constrained and slides along one side 7 of the work table 4 parallel to the infeed direction X, which corresponds to one of the two long sides of the machine 1. The frame 8 extends and projects from the respective side 7 of the machine 1, at the same height as the work table 4, and consists of a frame 9, typically formed by tubular elements, supporting the panel P to be cut. The frame 9 is constrained to the base 3 by means of a saddle 10 sliding in a guide 11 cut in the side 7 of the base 3.

A graduated rule 12 is mounted on the frame 8 and extends away from the blade 6a. The zero on the graduated rule 12 coincides with the position of the blade 6a and allows the panels P to be cut to size. The working portion P1 of the panel P is the portion associated with the rule 12, while the cutoff portion P2 remains on the opposite side of the blade 6a (Figure 2). If, however, the length of the panel P is limited, it is possible to remove the frame 8 and use just the rule 12 (Figure 1).

The graduated rule 12 can also move angularly on the work table 4, to adopt a plurality of angular positions with respect to the infeed direction X.

In particular, according to the illustrated embodiment, the rule 12 slides in two auxiliary guides 13a, 13b, parallel to the infeed direction X in the work table 4, by means of two respective pins 14a (defining the pivot point) and 14b. The relative position along the direction X of the two pins 14a, 14b determines the inclination of the rule 12.

To be able to position the rule 12 at a certain angle, the machine 1 comprises a series of reference marks 15 on the horizontal work table 4, of a known type and only partially illustrated in Figure 1.

A stop bar 16 is mounted on the rule 12, extending transversally to the rule 12 and sliding along it in order to block the panel P laterally. The stop bar 16 is moved and clamped in the position corresponding to the measurement of the working portion P1 that one wishes to obtain from the panel P. In actual fact the stop bar 16 slides along the rule 12, allowing the display of a working reference measurement QR on the rule 12.

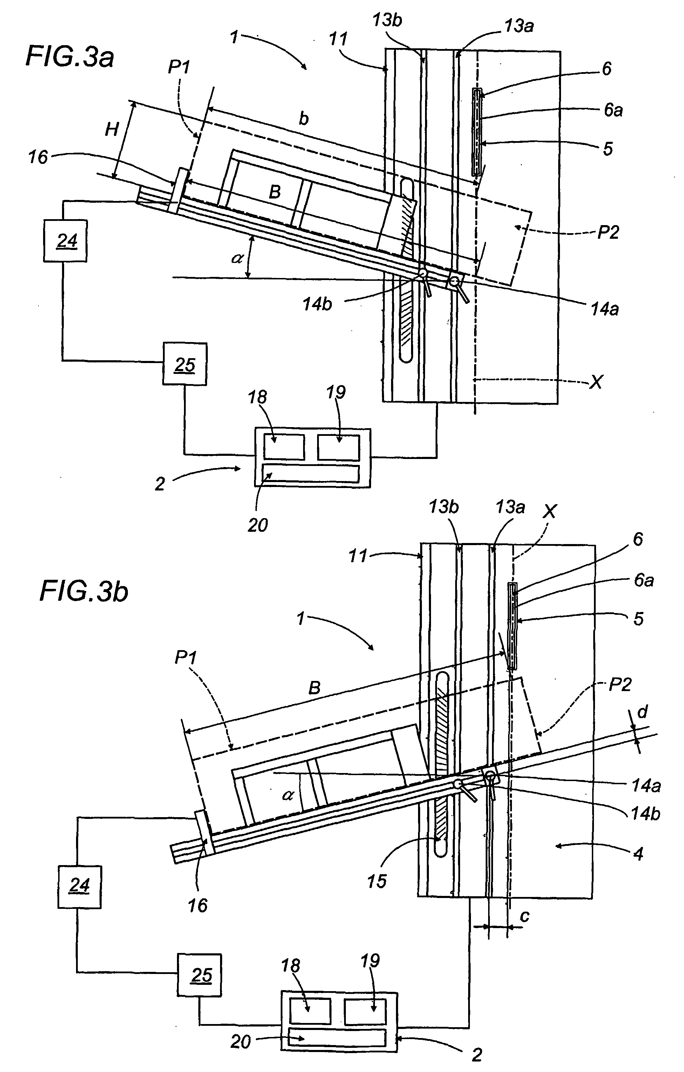

In the attached figures, the panel P is positioned on the work table 4 against the rule 12 and in front of the rule 12 in relation to the infeed direction X towards the blade 6a of the circular saw 6, while the adjacent side of the panel P, perpendicular to the side against the rule 12, is placed against the stop bar 16, already positioned at the required measurement QR, in order to obtain the required cutting position. To make the cut, the operator pushes the rule 12 and moves the panel P towards the blade 6a (Figures 3a and 3b).

The apparatus 2, shown schematically in Figures 2, 3a and 3b, for the display of the measurement of slanting cuts on panels P presents a storage and calculation unit 18 mounted on the machine 1, data input means 19 connected to the storage and calculation unit 18 and a display unit 20 connected to the storage and calculation unit 18.

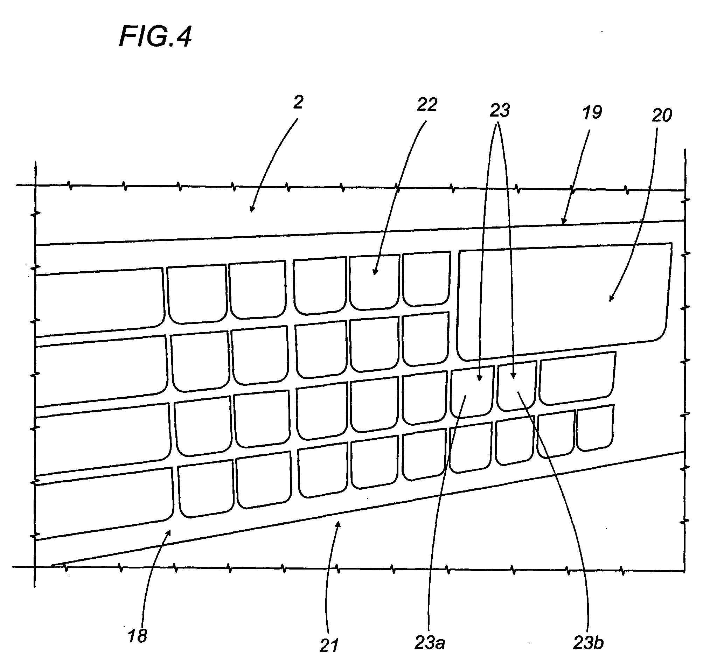

In the preferred embodiment illustrated in Figure 4, the apparatus 2 has a box-type structure 21 mounted on the machine 1 and in which the storage and calculation unit 18 is housed. The display unit 20 and the data input means 19 are positioned on the front of the box-type structure 21.

This apparatus preferably forms a single structure with a unit that controls the functioning and comprises appropriate means that control the rotation speed of the saw 6, its inclination and other known parameters (some of which will be described in more detail below).

Advantageously, as can be seen in Figure 4, the display unit 20 of the apparatus 2 consists of a liquid crystal or LED display while the data input means 19 comprise a numerical keypad 22 and a plurality of function keys 23.

With reference to Figures 3a and 3b, the data input means 19 allow the input in the storage and calculation unit 18 of at least a first set of parameters: a first parameter B, b relative to a first length of the panel P parallel to the rule 12, a second parameter H relative to the width of the panel P, measured at right angles to the rule 12, and a third parameter α relative to the angular position of the rule 12. The display unit 20 allows the display of a fourth parameter corresponding to the working reference measurement QR at which the stop bar 16 is positioned; this fourth parameter is obtained by the processing of the first B, b, second H and third α parameters by the storage and calculation unit 18.

In particular, considering the working portion of panel P1 after the cut has been made, the shape of this portion P1 is that of a right-angled trapezium. The operator can easily measure the side adjacent to the rule 12, which corresponds either to the longer base or to the shorter base of the right-angled trapezium.

To make a cut to obtain a certain value on the side opposite to the side adjacent to the rule 12, it is necessary to position the stop bar 16 at a distance corresponding to the fourth parameter QR and which is based on the first B, b, second H and third α parameters.

As shown in Figure 3a, the rule 12 is rotated by an angle α in a clockwise direction, with respect to the position at right angles to the infeed direction X, the side resting against the rule 12 corresponding to the longer base B of the right-angled trapezium. In this case, the first parameter can be the chosen measurement of the shorter base b of the working portion P1 of the trapezium, while the fourth parameter QR displayed defines the position of the stop bar 16 as the measurement of the longer base B; after the cut has been made, the entered value of the shorter base b will thus be obtained.

If, on the other hand, with reference to Figure 3b, the rule 12 is rotated by an angle α in an anticlockwise direction, the side resting against the rule 12 becomes the shorter base b. In this case, the first parameter can be the measurement chosen for the longer base B of the right-angled trapezium while the fourth parameter QR displayed defines the position of the stop bar 16 as the measurement of the shorter base b; after the cut has been made, the entered value of the longer base B will thus be obtained.

To simplify operations, the first parameter is usually always indicated as the longer base B of the right-angled trapezium, regardless of the direction in which the rule 12 is inclined.

In the event that, in addition to the rule 12, the blade 6a is also inclined (as shown in Figure 5), the data input means 19 are enabled for the input of additional parameters in the storage and calculation unit 18 in order to obtain the parameter QR for positioning of the stop bar 16.

These parameters can comprise:
- a fifth parameter relative to the angle β of inclination of the blade 6a with respect to the horizontal work table 4;
- a sixth parameter relative to the thickness S of the blade 6a;
- a seventh parameter relative to the thickness SP of the panel P.

The storage and calculation unit 18 can already contain, housed in special memory banks, a plurality of machine parameters that allow the position QR to be calculated with greater precision.

These parameters can comprise (see Figures 3a, 3b and 5):
- a first figure relative to the distance -a-between the pivot axis AF of the blade 6a and the horizontal work table 4;
- a second figure relative to the distance -b'- between the pivot axis AF of the blade 6a and the side 6b of the blade 6 opposite the horizontal work table 4;
- a third figure relative to the distance -c-between the pivot point 14a of the rule 12 and cutting surface 6c (or blade edge) of the blade 6a;
- a fourth figure relative to the distance -d-between the pivot point 14a of the rule 12 and the edge of the rule 12 on which the panel P rests.

More specifically, the apparatus 2, as shown in Figure 4, presents at least two function keys 23a, 23b, to respectively carry out the calculations with the blade 6a parallel to the work table 4 and with the blade inclined with respect to the work table 4 according to the diagram illustrated in Figure 6.

Advantageously, as schematically shown in Figure 2, the apparatus 2 also comprises motor-driving means 24 and a control unit 25, connected to the storage and calculation unit 18, to move the stop bar 16 automatically along the graduated rule 12 to the position indicated by the calculated fourth parameter QR.

During functioning, the operator inclines the rule 12 by a predetermined angle, using the reference marks 15, and then enters the known parameters in the apparatus 2 (see Figure 6). The apparatus 2 displays the value QR at which the sliding stop bar 16 must be positioned in order to cut the panel P according to a predetermined measurement or, preferably, moves the bar 16 automatically.

This invention resolves the disadvantages encountered in the prior art and achieves the proposed aims.

First of all, the apparatus according to this invention makes it possible to speed up the positioning of the panels in order to carry out slanting cuts, with consequent savings in production costs and times. It is in fact no longer necessary for the operator to proceed according to manual calculations, since the fourth parameter QR directly provides the measurement relative to the positioning of the sliding stop bar. The entire cutting operation is even faster if the apparatus is equipped with a motor-driven stop bar.

The apparatus according to this invention also makes it possible to carry out slanting cuts with greater precision and to avoid possible errors by the operator.

## Claims

1. An apparatus to display the measurement of slanting cuts on panels which can be associated with circular saw machines comprising:
- a base (3);
- a horizontal work table (4) mounted on this base (3), for the sliding along an infeed direction (X) of a panel (P) to be cut;
- a blade (6a) of a circular saw (6), the axis of which is substantially parallel to the work table (4), emerging from a slot (5) in the work table and parallel to the infeed direction (X);
- a graduated rule (12) mounted on the work table (4), extending away from the blade (6a) and equipped with a stop bar (16) for the panel (P), sliding along the rule (12) to permit the display of a working reference measurement (QR) on the rule (12); this graduated rule (12) being angularly mobile on the work table (4), to adopt a plurality of angular positions with respect to the infeed direction (X); one side of the panel (P) to be cut being placed against the graduated rule (12) and the adjacent side against the stop bar (16);
- a storage and calculation unit (18) mounted on the machine (1) ;
- data input means (19) connected to the storage and calculation unit (18), to enter in the storage and calculation unit (18) at least:
- a first parameter (B; b) relative to a first length of a portion of the cut panel (P1) parallel to the rule (12);
- a second parameter (H) relative to the width of the panel (P) measured at right angles to the rule (12);
- a third parameter (α) relative to the angular position of the rule (12);
- a display unit (20) connected to the storage and calculation unit (18) to display a fourth parameter corresponding to the working reference measurement (QR) at which the stop bar (16) can be positioned on the rule (12), obtained by the processing of the first (B; b), second (H) and third (α) parameters by the storage and calculation unit (18);
the apparatus (2) being **characterised in that** the fourth parameter corresponds to a second length of a portion of the cut panel, parallel and opposite to the first length.

2. The apparatus according to claim 1, **characterised in that** the first parameter relative to the first length of the portion of the cut panel (P1) corresponds to the measurement of the longer base (B) of the portion (P1) which is the shape of a right-angled trapezium; the shorter base (b) being positioned against the graduated rule (12); the fourth parameter (QR) providing the measurement of the shorter base (b) of the right-angled trapezium on the graduated rule (12), to obtain the length of the longer base (B) as set.

3. The apparatus according to claim 1, **characterised in that** the first parameter relative to the first length of the portion of the cut panel (P1) corresponds to the measurement of the shorter base (b) of the portion (P1) which is the shape of a right-angled trapezium; the longer base (B) being positioned against the graduated rule (12); the fourth parameter (QR) providing the measurement of the longer base (B) of the right-angled trapezium on the graduated rule (12), to obtain the length of the shorter base (b) as set.

4. The apparatus according to claim 1, in which the blade (6a) can be rotated at an angle around a pivot axis (AF) parallel to the horizontal work table (4) to adopt a plurality of inclined positions with respect to the horizontal work table, **characterised in that** the data input means (19) are enabled for the input of additional parameters in the storage and calculation unit (18), comprising:
- a fifth parameter relative to the angle (β) of inclination of the blade (6a) with respect to the horizontal work table (4);
- a sixth parameter relative to the thickness (S) of the blade (6a);
- a seventh parameter relative to the thickness (SP) of the panel (P).

5. The apparatus according to claims 1 and 4, **characterised in that** the storage and calculation unit (18) comprises a plurality of machine parameters comprising:
- a first figure relative to the distance (a) between the pivot axis (AF) of the blade (6a) and the horizontal work table (4);
- a second figure relative to the distance (b') between the pivot axis (AF) of the blade (6a) and the side (6b) of the blade opposite the horizontal work table (4);
- a third figure relative to the distance (c) between a pivot point (14a) of the rule (12) and the cutting surface (6c) of the blade (6a),
- a fourth figure relative to the distance (d) between the pivot point (14a) of the rule (12) and the edge of the rule (12) on which the panel (P) rests.

6. The apparatus according to claim 1, **characterised in that** it also comprises motor-driving means (24) to automatically move the stop bar (16) by sliding it along the graduated rule (12) to the measurement (QR) indicated as the calculated fourth parameter, in order to block the panel (P) to be cut in the position corresponding to the set length.

7. The apparatus according to claim 1, **characterised in that** it comprises a box-type structure (21) mounted on the machine (1); the storage and calculation unit (18) being housed in the box-type structure (21); the display unit (20) and the data input means (19) being housed in the box-type structure (21).

8. The apparatus according to claim 1, **characterised in that** the display unit (20) comprises a LED display.

9. The apparatus according to claim 1, **characterised in that** the data input means (19) comprise a plurality of keys.

10. A circular saw machine comprising:
- a base (3);
- a horizontal work table (4) mounted on the base (3), on which a panel (P) to be cut slides in an infeed direction (X);
- a blade (6a) of a circular saw (6), its axis being substantially parallel to the work table (4), emerging from a slot (5) in the work table and parallel to the infeed direction (X);
- a graduated rule (12) mounted on the work table (4), extending away from the blade (6a), and equipped with a stop bar (16) for the panel (P), sliding along the rule (12) to allow the display of a working reference measurement (QR) on the rule (12); the graduated rule (12) being angularly mobile on the work table (4) to adopt a plurality of angular positions with respect to the infeed direction (X); one side of the panel (P) to be cut being positioned against the graduated rule (12) and an adjacent side against the stop bar (16); the machine being **characterised in that** it also comprises an apparatus (2) for the display of the measurement of slanting cuts on panels (P) according to one or more of the claims from 1 to 7.

## Patentansprüche

1. Vorrichtung zur Darstellung der Messung von Schrägschnitten auf Platten, welche Kreissägemaschinen zugeordnet werden können, enthaltend:
- einen Sockel (3);
- einen auf diesem Sockel (3) montierten horizontalen Arbeitstisch (4) zum Verschieben einer zu schneidenden Platte (P) entlang einer Zuführrichtung (X);
- ein Sägeblatt (6a) einer Kreissäge (6), dessen Achse im wesentlichen parallel zu dem Arbeitstisch (4) verläuft, austretend aus einem Schlitz (5) in dem Arbeitstisch und parallel zu der Zuführrichtung (X);
- eine auf dem Arbeitstisch (4) montierte Messleiste (12), die sich von dem Sägeblatt (6a) fort erstreckt und mit einer Anschlagleiste (16) für die Platte (P) versehen ist, welche sich entlang der Messleiste (12) verschiebt, um die Sichtbarmachung eines Arbeitsbezugswertes (QR) an der Messleiste (12) zu erlauben; wobei diese Messleiste (12) winkelmässig auf dem Arbeitstisch (4) beweglich ist, um eine Anzahl von Winkelpositionen im Verhältnis zu der Zuführrichtung (X) einzunehmen; wobei eine Seite der zu schneidenden Platte (P) an der Messleiste (12) anliegt und die angrenzende Seite an der Anschlagleiste (16);
- eine an der Maschine (1) montierte Speicher- und Recheneinheit (18);
- Dateneingabemittel (19), angeschlossen an die Speicher- und Recheneinheit (18), um in die Speicher- und Recheneinheit (18) wenigstens die folgenden Daten einzugeben:
- einen ersten Parameter (B; b), betreffend eine erste Länge eines Abschnittes der geschnittenen Platte (P1) parallel zu der Messleiste (12);
- einen zweiten Parameter (H), betreffend die Breite der Platte (P), gemessen im rechten Winkel zu der Messleiste (12);
- einen dritten Parameter (α), betreffend die Winkelposition der Messleiste (12);
- eine Displayeinheit (20), angeschlossen an die Speicher- und Recheneinheit (18), um einen vierten Parameter darzustellen, entsprechend dem Arbeitsbezugswert (QR), an welchem die Anschlagleiste (16) an der Messleiste (12) positioniert werden kann, erhalten durch die Verarbeitung der ersten (B; b), zweiten (H) und dritten (α) Parameter durch die Speicher- und Recheneinheit (18);
wobei die Vorrichtung (2) **dadurch gekennzeichnet ist, dass** der vierte Parameter einer zweiten Länge eines Abschnittes der geschnittenen Platte entspricht, parallel zu und entgegengesetzt der ersten Länge.

2. Vorrichtung nach Patentanspruch 1, **dadurch gekennzeichnet, dass** der erste Parameter betreffend die erste Länge des Abschnittes der geschnittenen Platte (P1) dem Messwert der längeren Basis (B) des Abschnittes (P1) entspricht, welche die Form von einem rechtwinkligen Trapez hat; wobei die kürzere Basis (b) an der Messleiste (12) anliegend positioniert ist; und wobei der vierte Parameter (QR) den Messwert der kürzeren Basis (b) des rechtwinkligen Trapezes an der Messleiste (12) liefert, um die Länge der längeren Basis (B) wie eingestellt zu erhalten.

3. Vorrichtung nach Patentanspruch 1, **dadurch gekennzeichnet, dass** der erste Parameter betreffend die erste Länge des Abschnittes der geschnittenen Platte (P1) dem Messwert der kürzeren Basis (b) des Abschnittes (P1) entspricht, welche die Form von einem rechtwinkligen Trapez hat; wobei die längere Basis (B) an der Messleiste (12) anliegend positioniert ist; und wobei der vierte Parameter (QR) den Messwert der längeren Basis (B) des rechtwinkligen Trapezes an der Messleiste (12) liefert, um die Länge der kürzeren Basis (b) wie eingestellt zu erhalten.

4. Vorrichtung nach Patentanspruch 1, in welcher das Sägeblatt (6a) in einem Winkel um eine Drehachse (AF) parallel zu dem horizontalen Arbeitstisch (4) gedreht werden kann, um eine Anzahl von geneigten Positionen im Verhältnis zu dem horizontalen Arbeitstisch einzunehmen, **dadurch gekennzeichnet, dass** die Dateneingabemittel (19) zur Eingabe von zusätzlichen Parametern in die Speicher- und Recheneinheit (18) befähigt sind, enthaltend:
- einen fünften Parameter, betreffend den Winkel (β) der Neigung des Sägeblattes (6a) im Verhältnis zu dem horizontalen Arbeitstisch (4);
- einen sechsten Parameter, betreffend die Stärke (S) des Sägeblattes (6a);
- einen siebenten Parameter, bestreffend die Dicke (SP) der Platte (P).

5. Vorrichtung nach den Patentansprüchen 1 und 4, **dadurch gekennzeichnet, dass** die Speicher- und Recheneinheit (18) eine Anzahl von Maschinenparameter beinhaltet, enthaltend:
- erste Daten, betreffend den Abstand (a) zwischen der Drehachse (AF) des Sägeblattes (6a) und dem horizontalen Arbeitstisch (4);
- zweite Daten, betreffend des Abstand (b') zwischen der Drehachse (AF) des Sägeblattes (6a) und der dem horizontalen Arbeitstisch (4) gegenüberliegenden Seite (6b) des Sägeblattes;
- dritte Daten, betreffend den Abstand (c) zwischen dem Drehpunkt (14a) der Messleiste (12) und der Schneidfläche (6c) des Sägeblattes (6a);
- vierte Daten, betreffend den Abstand (d) zwischen dem Drehpunkt (14a) der Messleiste (12) und der Kante der Messleiste (12), an welcher die Platte (P) anliegt.

6. Vorrichtung nach Patentanspruch 1, **dadurch gekennzeichnet, dass** sie ebenfalls motorisierte Antriebsmittel (24) enthält, um automatisch die Anschlagleiste (16) durch Verschieben entlang der Messleiste (12) bis auf den Messwert (QR) zu bewegen, der als berechneter vierter Parameter angezeigt ist, um die zu schneidende Platte (P) in der Position entsprechend der eingestellten Länge festzustellen.

7. Vorrichtung nach Patentanspruch 1, **dadurch gekennzeichnet, dass** sie eine kastenartige Struktur (21) enthält, die an der Maschine (1) montiert ist; wobei die Speicher- und Recheneinheit (18) in der kastenartigen Struktur (21) aufgenommen ist; und wobei die Displayeinheit (20) und die Dateneingabemittel (19) in der kastenartigen Struktur (21) aufgenommen sind.

8. Vorrichtung nach Patentanspruch 1, **dadurch gekennzeichnet, dass** die Displayeinheit (20) ein LED-Display enthält.

9. Vorrichtung nach Patentanspruch 1, **dadurch gekennzeichnet, dass** die Dateneingabemittel (19) eine Anzahl von Tasten enthalten.

10. Kreissäge, enthaltend:
- einen Sockel (3),
- einen auf dem Sockel (3) montierten horizontalen Arbeitstisch (4), auf welchem eine zu schneidende Platte (P) entlang einer Zuführrichtung (X) gleitet;
- ein Sägeblatt (6a) einer Kreissäge (6), dessen Achse im wesentlichen parallel zu dem Arbeitstisch (4) verläuft, austretend aus einem Schlitz (5) in dem Arbeitstisch und parallel zu der Zuführrichtung (X);
- eine auf dem Arbeitstisch (4) montierte Messleiste (12), die sich von dem Sägeblatt (6a) fort erstreckt und mit einer Anschlagleiste (16) für die Platte (P) versehen ist, welche sich entlang der Messleiste (12) verschiebt, um die Sichtbarmachung eines Arbeitsbezugswertes (QR) an der Messleiste (12) zu erlauben; wobei die Messleiste (12) winkelmässig auf dem Arbeitstisch (4) beweglich ist, um eine Anzahl von Winkelpositionen im Verhältnis zu der Zuführrichtung (X) einzunehmen; wobei eine Seite der zu schneidenden Platte (P) an der Messleiste (12) anliegt und die angrenzende Seite an der Anschlagleiste (16); wobei die Maschine **dadurch gekennzeichnet ist, dass** sie ebenfalls eine Vorrichtung (2) zu Darstellung der Messung von Schrägschnitten auf Platten (P) nach einem oder mehreren der Patentansprüche von 1 bis 7 enthält.

## Revendications

1. Un appareil pour afficher la mesure de coupes obliques sur des panneaux, qui peut être associé à des machines à scie circulaire comprenant :
- un bâti (3) ;
- une table d'usinage (4), horizontale, montée sur ce bâti (3) et sur laquelle coulisse un panneau (P) à couper le long d'une direction d'avancement (X) ;
- une lame (6a) d'une scie circulaire (6), dont l'axe est essentiellement parallèle à la table d'usinage (4) et dépassant d'une fente (5) réalisée dans la table d'usinage elle-même et parallèle à la direction d'avancement (X) ;
- une règle graduée (12) montée sur la table d'usinage (4), s'étendant dans une direction opposée à la lame (6a) et pourvue d'une barre de butée (16) pour le panneau (P), telle barre de butée (16) coulissant le long de la règle (12) afin de permettre l'affichage d'une mesure de référence utile (QR) sur la règle (12) ; cette règle graduée (12) étant mobile angulairement sur la table d'usinage (4) afin de prendre une pluralité de positions angulaires par rapport à la direction d'avancement (X) ; un côté du panneau (P) à couper étant placé contre la règle graduée (12) et le côté adjacent contre la barre de butée (16) ;
- une unité (18) de mémorisation et de calcul, montée sur la machine (1) ;
- des moyens (19) d'entrée de données, reliés à l'unité (18) de mémorisation et de calcul, pour entrer dans cette même unité (18) de mémorisation et de calcul au moins :
- un premier paramètre (B; b) relatif à une première longueur d'une portion du panneau coupé (P1) parallèle à la règle (12) ;
- un deuxième paramètre (H) relatif à la largeur du panneau (P) mesurée à angle droit avec la règle (12) ;
- un troisième paramètre (α) relatif à la position angulaire de la règle (12) ;
- une unité d'affichage (20) reliée à l'unité (18) de mémorisation et de calcul pour afficher un quatrième paramètre correspondant à la mesure de référence utile (QR) à laquelle la barre de butée (16) peut être positionnée sur la règle (12), tel quatrième paramètre étant obtenu à l'issue du traitement des premier (B; b), deuxième (H) et troisième (α) paramètres exécuté par l'unité (18) de mémorisation et de calcul ;
l'appareil (2) étant **caractérisé en ce que** le quatrième paramètre correspond à une seconde longueur d'une portion du panneau coupé, parallèle et opposée à la première longueur.

2. L'appareil selon la revendication 1, **caractérisé en ce que** le premier paramètre relatif à la première longueur de la portion du panneau coupé (P1) correspond à la mesure de la grande base (B) de la portion (P1) elle-même qui a la forme d'un trapèze rectangle ; la petite base (b) étant positionnée contre la règle graduée (12) ; le quatrième paramètre (QR) fournissant la mesure de la petite base (b) du trapèze rectangle sur la règle graduée (12) afin d'obtenir la longueur de la grande base (B) telle que définie.

3. L'appareil selon la revendication 1, **caractérisé en ce que** le premier paramètre relatif à la première longueur de la portion du panneau coupé (P1) correspond à la mesure de la petite base (b) de la portion (P1) elle-même qui a la forme d'un trapèze rectangle ; la grande base (B) étant positionnée contre la règle graduée (12) ; le quatrième paramètre (QR) fournissant la mesure de la grande base (B) du trapèze rectangle sur la règle graduée (12) afin d'obtenir la longueur de la petite base (b) telle que définie.

4. L'appareil selon la revendication 1, dans lequel la lame (6a) peut être tournée angulairement autour d'un axe de pivotement (AF) parallèle à la table d'usinage horizontale (4) afin de prendre une pluralité de positions inclinées par rapport à la table d'usinage horizontale, **caractérisé en ce que** les moyens (19) d'entrée de données sont habilités à l'entrée de paramètres supplémentaires dans l'unité (18) de mémorisation et de calcul, comprenant :
- un cinquième paramètre relatif à l'angle (β) d'inclinaison de la lame (6a) par rapport à la table d'usinage horizontale (4) ;
- un sixième paramètre relatif à l'épaisseur (S) de la lame (6a) ;
- un septième paramètre relatif à l'épaisseur (SP) du panneau (P).

5. L'appareil selon les revendications 1 et 4, **caractérisé en ce que** l'unité (18) de mémorisation et de calcul comprend une pluralité de paramètres machine comprenant :
- une première donnée relative à la distance (a) entre l'axe de pivotement (AF) de la lame (6a) et la table d'usinage horizontale (4) ;
- une deuxième donnée relative à la distance (b') entre l'axe de pivotement (AF) de la lame (6a) et le côté (6b) de la lame opposé à la table d'usinage horizontale (4) ;
- une troisième donnée relative à la distance (c) entre un point de pivotement (14a) de la règle (12) et la surface de coupe (6c) de la lame (6a) ;
- une quatrième donnée relative à la distance (d) entre le point de pivotement (14a) de la règle (12) et le bord de la règle (12) sur lequel repose le panneau (P).

6. L'appareil selon la revendication 1, **caractérisé en ce qu'**il comprend aussi des moyens motorisés (24) pour déplacer automatiquement la barre de butée (16), en la faisant coulisser le long de la règle graduée (12), jusqu'à la mesure (QR) indiquée comme étant le quatrième paramètre calculé, afin de bloquer le panneau (P) à couper dans la position correspondant à la longueur définie.

7. L'appareil selon la revendication 1, **caractérisé en ce qu'**il comprend une structure de type boîte (21) montée sur la machine (1) ; l'unité (18) de mémorisation et de calcul étant logée dans ladite structure de type boîte (21) ; l'unité d'affichage (20) et les moyens (19) d'entrée de données étant logés dans ladite structure de type boîte (21).

8. L'appareil selon la revendication 1, **caractérisé en ce que** l'unité d'affichage (20) comprend un afficheur à DEL.

9. L'appareil selon la revendication 1, **caractérisé en ce que** les moyens (19) d'entrée de données comprennent une pluralité de touches.

10. Une machine à scie circulaire comprenant :
- un bâti (3) ;
- une table d'usinage (4), horizontale, montée sur le bâti (3) et sur laquelle coulisse un panneau (P) à couper dans une direction d'avancement (X) ;
- une lame (6a) d'une scie circulaire (6), dont l'axe est essentiellement parallèle à la table d'usinage (4) et dépassant d'une fente (5) réalisée dans la table d'usinage elle-même et parallèle à la direction d'avancement (X) ;
- une règle graduée (12) montée sur la table d'usinage (4), s'étendant dans une direction opposée à la lame (6a) et pourvue d'une barre de butée (16) pour le panneau (P), telle barre de butée (16) coulissant le long de la règle (12) afin de permettre l'affichage d'une mesure de référence utile (QR) sur la règle (12) ; la règle graduée (12) étant mobile angulairement sur la table d'usinage (4) afin de prendre une pluralité de positions angulaires par rapport à la direction d'avancement (X) ; un côté du panneau (P) à couper étant placé contre la règle graduée (12) et un côté adjacent contre la barre de butée (16) ; la machine étant **caractérisée en ce qu'**elle comprend aussi un appareil (2) pour afficher la mesure de coupes obliques sur des panneaux (P) selon une ou plusieurs des revendications de 1 à 7.
